# EUROPEAN PATENT APPLICATION

(11) **EP 2 562 770 A1**
(43) Date of publication of application: **27.02.2013**
(21) Application number: 11178580.4
(22) Date of filing: 24.08.2011
(51) Int. Cl.: H01F 1/153, H01F 41/02, C04B 35/14, C23C 18/14, C04B 35/626, C23C 18/12

(54) **Corrosion-resistant magnetic core**

(71) Applicant: ABB Research Ltd., 8050 Zürich (CH)
(72) Inventor: Donzel, Lise, 5430 Wettingen (CH); Simon, Reinhard, 5405 Dättwil (CH); Fuhrmann, Henning, 8048 Zürich (CH)
(74) Representative: ABB Patent Attorneys

(57) **Abstract**

A magnetic core for an electrical device comprises at least one metal layer, wherein the metal layer comprises a metal coated with a silica based coating.

## Description

### TECHNICAL FIELD

The subject matter described herein relates generally to magnetic cores for electrical devices, and more particularly to magnetic cores for dry-type transformers having a core including amorphous steel.

### BACKGROUND OF THE INVENTION

Dry-type transformers have several well known advantages over oil-immersed units. There is reduced risk of fire and explosion, the environmental friendliness is higher, they are maintenance free, and can be installed closer to the consumption point. At the same time, power transformers having an amorphous magnetic core gain importance due to their higher energy efficiency. By using amorphous steel for the core, the core losses can be significantly reduced.

Most amorphous cores are used in oil-immersed transformers. While using amorphous cores for dry transformers, the core is not protected from the ambient atmosphere as in the case of oil transformers, and measures must be taken to protect the core against corrosion.

Moreover, the amorphous steel ribbon used for winding amorphous cores is significantly thinner, with typically about 25 µm, than conventional steel ribbon with typically 250 µm. This is mainly due to the manufacturing process, as amorphous steel is produced by extremely rapid quenching, which is more easily achievable with thin metal layers. However, due to the thin ribbon, it is not feasible to use lacquer widely used for protecting and isolating conventional steel ribbon for magnetic cores, as the thickness of the lacquer layer is typically in a range which comes close to the thickness of the amorphous ribbon. Hence, the volume of the amorphous magnetic core taken up by the lacquer would be considerably high, which is both economically and technically undesirable. WO 9900805 discloses a method for impregnating an amorphous transformer core with a low viscosity bonding material.

Amorphous ribbon is brittle. This may result in small particles and flakes braking from the core, which is generally undesirable and may even lead to severe malfunction of the transformer. Therefore, it is known to encapsulate the core to avoid deformation of the core and/or to prevent amorphous metal flakes to break off, which is a well-known technique in the field of oil-immersed transformers. The encapsulation is typically an epoxy coating.

The typical epoxy coatings applied for mechanical stabilization can also protect the core from the environment in the above sense, provided the core is fully encapsulated. However, once the amorphous core is encapsulated by epoxy resin, the unit is closed once and for all, and can not be unlaced to replace a defect coil without a significant amount of work for dismantling the epoxy coating, which is both cumbersome and economically undesirable.

Hence, it is desirable to have a magnetic core for a transformer with corrosion and oxidation resistance, while avoiding the disadvantages of known solutions.

### BRIEF DESCRIPTION OF THE INVENTION

The problems laid out above are at least partly solved by a transformer according to claim 1, a method according to claim 5, and a use according to claim 13.

In a first aspect, a magnetic core for an electrical device is provided. The core includes at least one metal layer, wherein the metal layer includes a metal coated with a silica based coating.

In a further aspect, a method of producing a magnetic core for an electrical device is provided. The method includes providing a steel ribbon, applying a layer of a silicon polymer precursor to the ribbon, curing the precursor, and winding the ribbon in order to produce a magnetic core.

In a yet further aspect, the use of a silicon polymer precursor in the production process of a magnetic core for an electrical device is provided.

Further aspects, advantages and features of the present invention are apparent from the dependent claims, the description and the accompanying drawings.

### BRIEF DESCRIPTION OF THE DRAWINGS

A full and enabling disclosure, including the best mode thereof, to one of ordinary skill in the art is set forth more particularly in the remainder of the specification, including reference to the accompanying figures wherein:

Fig. 1 schematically shows the application of a silicon polymer precursor to the surface of a metal layer according to embodiments;

Fig. 2 schematically shows a reaction step of the silicon polymer precursor of Fig. 1 with the surface;

Fig. 3 shows further chemical reaction step according to embodiments;

Fig. 4 shows a metal sheet partly treated with a method according to embodiments.

Fig. 5 schematically shows a method of coating a ribbon according to embodiments.

Fig. 6 schematically shows a further method of coating a ribbon according to embodiments.

Fig. 7 schematically shows a toroidal magnetic core according to embodiments.

Fig. 8 shows a top view and a side view of a magnetic core according to embodiments.

### DETAILED DESCRIPTION OF THE INVENTION

Reference will now be made in detail to various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

Within the following description of the drawings, the same reference numbers refer to the same components. Generally, only the differences with respect to the individual embodiments are described.

The systems and methods described herein are not limited to the specific embodiments described, but rather, components of the systems and/or steps of the methods may be utilized independently and separately from other components and/or steps described herein. Rather, the exemplary embodiment can be implemented and used in connection with many other applications, in particular with wound or laminated amorphous and non-amorphous magnetic cores for any type of electrical device, e.g., electromagnets, electric motors, inductors and other magnetic assemblies.

Embodiments described herein relate to magnetic cores for electrical devices, particularly for dry-type transformers, which are laminated or wound from thin amorphous steel ribbon, which is coated with a silica based coating. Typically, the silica based coating is SiOₓ. This coating is a good barrier against diffusion of oxygen and moisture. To produce the coating, a silicon polymer precursor, typically a polysilazane, is applied to the ribbon. By crosslinking, the precursor is transformed into SiOₓ. SiOₓ coatings can also, for example, be applied by chemical or physical vapor deposition techniques. However, the investment for CVD or PVD installations is high.

Polymer-derived ceramic coating is a rather new field of research. In the process, polysilazane or organo-polysilazane precursor solutions are applied by simple techniques such as dipping or spray coating onto a substrate. Curing of the coating typically occurs at a temperature between 400° to 800°C, however, in presence of humidity, low temperature curing from room temperature to about 150 °C has been demonstrated [cf. Preparation of moisture curable polysilazane coatings, F. Bauer et al., Progress in Organic Coatings, 53 (2005), 183].

A process for obtaining silicon polymer coatings as described herein is described in US 2009098300 A1:

The precursor solution includes at least one of the polysilazanes having the following formula, or mixtures of the two: 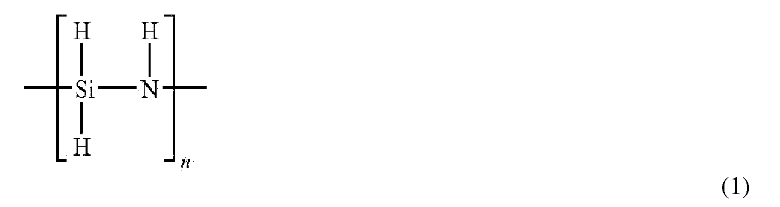 Perhydropolysilazan (PHPS) 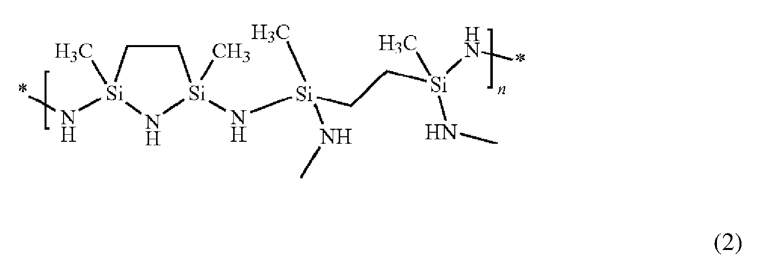 ABSE

in which n is an integer and is dimensioned such that the polysilazane has a number-average molecular weight of 150 to 150 000 g/mol, and also, if desired, a solvent and a catalyst and one or more co-binders.

The solvents in question are inert, aprotic solvents such as toluene, xylene, ethers, especially di-n-butyl ether, etc. Solvents particularly suitable for the perhydropolysilazane formulation or the ABSE formulation are organic solvents which contain no water and no reactive groups (such as hydroxyl groups or amine groups). Solvents in question include, for example, aliphatic or aromatic hydrocarbons, halogenated hydrocarbons, esters such as ethyl acetate or butyl acetate, ketones such as acetone or methyl ethyl ketone, ethers such as tetrahydrofuran or dibutyl ether, and also monoalkylene and polyalkylene glycol dialkyl ethers (glymes) or mixtures of these solvents.

A further possible constituent of the perhydropolysilazane formulation or the ABSE formulation may be additives, which affect, for example, formulation viscosity, film formation or evaporation behavior.

According to embodiments, the precursor solution contains 1 to 40% by weight of at least one perhydropolysilazane or ABSE of the formula (1) and formula (2) or mixtures of the two, in particular 5 to 30% by weight, more particularly 10 to 20% by weight, and, if desired, 0,001% to 5% by weight, preferably 0,01 to 2% by weight, of a catalyst.

Suitable catalysts are N-heterocyclic compounds, such as 1-methylpiperazine, 1-methylpiperidine, 4,4'-trimethylenedipiperidine, 4,4'-trimethylene(1-methylpiperidine), diazabicyclo[2.2.2]octane, and cis-2,6-dimethylpiperazine. Further suitable catalysts are mono-, di-, and trialkylamines such as methylamine, dimethylamine, trimethylamine, phenylamine, diphenylamine, and triphenylamine, DBU (1,8-diazabicyclo[5.4.0]-7-undecene), DBN (1,5-diazabicyclo[4.5.0]-5-nonene), 1,5,9-triazacyclododecane, and 1,4,7-triazacyclononane.

Further suitable catalysts are organic and inorganic acids such as acetic acid, propionic acid, butyric acid, valeric acid, maleic acid, stearic acid, hydrochloric acid, nitric acid, sulfuric acid, phosphoric acid, chloric acid, and hypochlorous acid. Further suitable catalysts are metal carboxylates of the general formula (RCOO)nM of saturated and unsaturated, aliphatic or alicyclic C₁-C₂₂ carboxylic acids and metal ions such as Ni, Ti, Pt, Rh, Co, Fe, Ru, Os, Pd, Ir, and Al; n is the charge of the metal ion.

Further suitable catalysts are acetylacetonate complexes of metal ions such as Ni, Pt, Pd, Al, and Rh. Further suitable catalysts are metal powders such as Au, Ag, Pd or Ni with a particle size of 20 to 500 nm. Further suitable catalysts are peroxides such as hydrogen peroxide, metal chlorides, and organometallic compounds such as ferrocenes and zirconocenes.

This can be followed by a thermal aftertreatment in order to accelerate the curing of the coating. Depending on the polysilazane formulation and, where appropriate, catalyst used, curing takes place even at room temperature.

In embodiments, curing of the precursor solution can also be performed or supported by application of UV radiation.

The mode of action of a polysilazane coating can be described as follows:

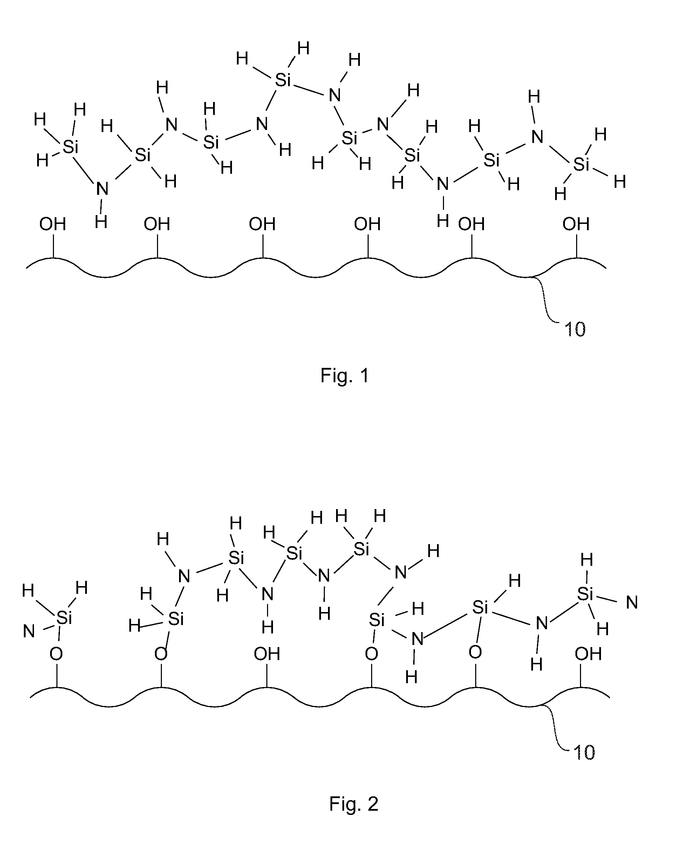

In Fig. 1, the situation just after application of the precursor solution is shown. An (exemplary) perhydropolysilazane (PHPS) molecule is located just above the surface 10 of the metal of the ribbon, where hydroxyl-groups (OH-) are bound to the surface 10. Fig. 2 shows the first reaction step: a chemical attachment of the polysilazane layer to the metal substrate by reaction of the oxidic metal surface with the polysilazane, thus formation of a (substrate)metal-O-Si(polysilazane layer), which happens at room temperature. It is to be noted that the shown length of the PHPS chain in Fig. 1 f. is, for illustrational purposes only, much smaller than the typical chain length of PHPS.

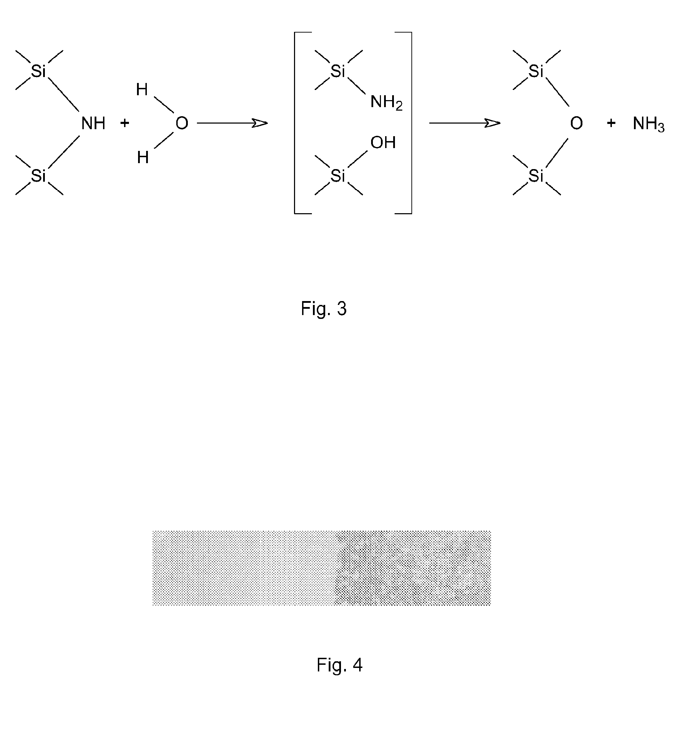

The 2nd step is shown in Fig. 3: during curing, the polysilazane is converted into SiOₓ or a cross-linked polysiloxane. The precursor coating cures in air due to reaction with moisture. The resulting layer adheres very good, is flexible (ribbon can be bent without the layer rupturing), exhibits outstanding diffusion stability with respect to oxygen and moisture, and is very resistant chemically.

The cured and hardened coating is a homogeneous ceramic layer. It has a thickness from 5 nm to 5 µm, more typically from 10 nm to 2 µm, e.g., 20 nm, 50 nm, 100 nm, 500 nm, 1 µm, or 1,5 µm, and ensures very good protection of the ribbon surfaces against corrosion and oxidation. The thickness of the cured coating can be modified by the applied amount of precursor solution per area of the metal surface.

In embodiments, the precursor solution includes perhydropolysilazane (PHPS) in a concentration from 3 % to 20 % in a solvent of dibutyl ether. PHPS has the advantage that the curing reaction leading to SiOₓ or cross-linked polysiloxan, as shown in Fig. 3, occurs even at room temperature in a few hours, when the humidity of the surroundings is sufficiently high, e.g., above 80% relative humidity. With a higher temperature, the curing process can be significantly increased. In a non-limiting example, with an additional catalyst of 5 % diethylaminoethanol, a conversion rate of 90% of the Si-H bonds can be achieved at a curing temperature of 50° C and 90 % relative humidity after 1 hour [cf. "Preparation of moisture curable polysilazane coatings", F. Bauer et al., Progress in Organic Coatings, 53 (2005), p. 186].

In embodiments, for the above precursor solution, curing temperatures of 20° C to 200° C, more typically from 25° C to 80° C, and relative humidity levels from 40 % to 100 %, more typically from 50 % to 95 %, are applied. The choice of these parameters significantly influences the curing time after which a sufficient conversion rate to SiOₓ has been reached, i.e. 90 %.

With the above described precursor solution, a high conversion rate to SiOₓ can be achieved at conditions which only require moderate temperatures and curing times. As already mentioned, in embodiments, the curing time at a given temperature and humidity can be significantly reduced by applying ultraviolet radiation to the precursor coating, which can contribute to reduce energy consumption during production.

The method does not require expensive investment and permits to apply a thin, homogeneous, protective SiOₓ coating on the amorphous core steel, before it is wound or laminated/stacked in order to form the core. It is understood that the method can also be applied to conventional, non-amorphous steel sheets or ribbon for producing magnetic cores, whereby a very effective isolation and corrosion protection is achieved, which is thinner than the conventionally used lacquer coating.

Fig. 4 shows a sheet of amorphous silicon-comprising steel as is used for producing transformer cores. The left half was dipped into a solution including 20 % of PHPS in a di-butyl ether solvent, while the rest of the sheet remained untreated. After letting the coating cure for about four hours at room temperature and 55 % relative humidity, the sheet has been submitted to 95 % relative humidity. Rusting can be observed on the unprotected surface of the stripe, while the coated area is free from corrosion.

In embodiments, the precursor solution can be applied at different stages of the production process. It may be applied at the facility producing the amorphous ribbon, hence in a step after quenching the ribbon, and before subsequent spooling of the ribbon. It may also be applied at the manufacturing facility of the transformer/coil etc., for example in a continuous process before winding of the amorphous core.

In embodiments, the coating is applied by passing the continuous ribbon through a bath with the precursor solution. Alternatively, it is also possible to apply the precursor solution by spraying it onto the ribbon surface. The latter method has the advantage, that the precursor solution can be stored in an air-tight container, thus protected from ambient humidity. Hence, no reaction with air humidity can occur in the solution supply, which extends the pot life of the precursor solution.

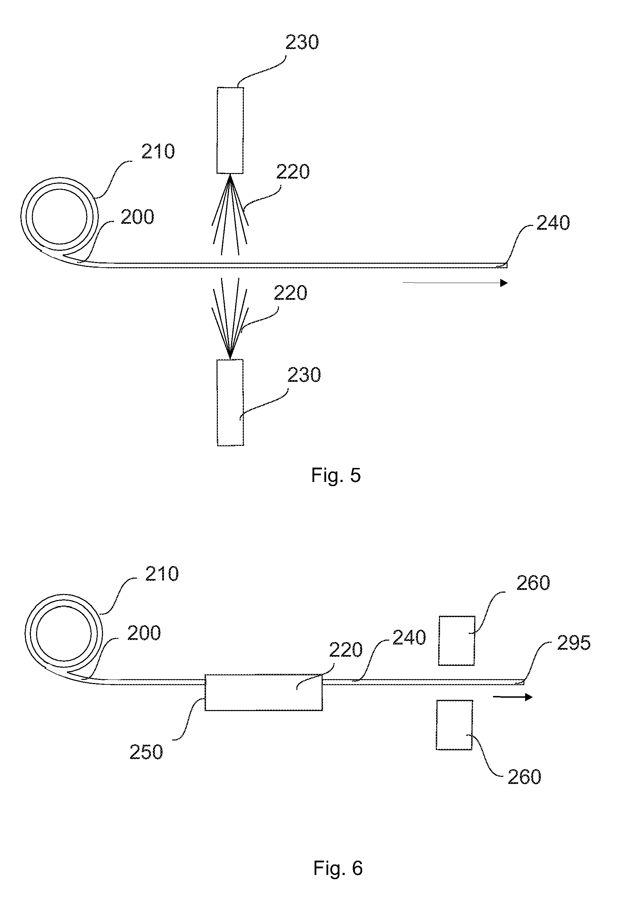

Fig. 5 schematically shows how a steel ribbon 200 (not shown according to scale for purposes of illustration), provided on a spool 210, is coated with a precursor solution 220. The solution is provided by spraying through one or more nozzles 230 connected to a precursor solution supply (not shown). Subsequently, the coated ribbon 240 is submitted to an atmosphere containing moisture in order to cure. It may then again be spooled (not shown, indicated by arrow) in order to be transported to the facility where the magnetic core 300, 310 is produced.

Fig. 6 shows an embodiment basically similar to that of Fig. 5. Differently, the precursor solution 220 is provided in a bath 250, and the ribbon 200 is transported through the bath in order to be coated with the precursor solution 220. Further, after coating, the coated ribbon 240 is exposed to ultraviolet radiation, emitted for instance by one or more UV lamps 260. The ribbon 295 with the cured precursor is then further treated as described with respect to Fig. 5 above. The method of treating the coated ribbon 240 with UV light may in embodiments also be applied to a spray-coated ribbon as in the embodiment of Fig. 5.

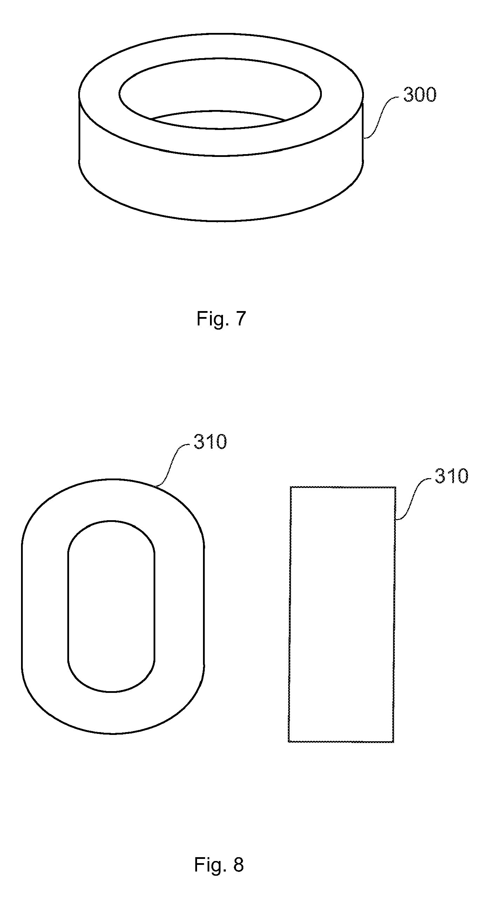

Fig. 7 shows a schematic view of a toroidal magnetic core 300 according to embodiments, which was wound from an amorphous ribbon treated according to embodiments described herein. In embodiments, the magnetic core is a transformer core, but may also be applied in other electrical devices like chokes etc.

Fig. 8 shows a top view (left) and a side view (right) of a magnetic core according to further embodiments, which was wound from a ribbon coated according to embodiments.

The embodiments of Fig. 7 and 8 are only to be regarded as non-limiting examples. A variety of other magnetic core types and shapes may be produced from a ribbon as described herein.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A magnetic core for an electrical device, comprising:
at least one metal layer;
wherein the metal layer comprises a metal coated with a silica based coating.

2. The magnetic core of claim 1, wherein the core is wound from a metal ribbon, and wherein the metal comprises amorphous steel.

3. The magnetic core of claims 1 or 2, wherein the silica based coating is a curing product of a silicon polymer precursor, preferably of a polysilazane and/or an organo-polysilazane and/or a polysilane precursor solution, most preferably a perhydropolysilazane solution.

4. The magnetic core of any preceding claim, wherein the silica based coating has a thickness from 5 nm to 5 µm.

5. A method of producing a magnetic core for an electrical device, comprising:
- providing a steel ribbon;
- applying a layer comprising a silicon polymer precursor to the ribbon;
- curing the precursor; and
- winding or stacking the ribbon in order to produce a magnetic core.

6. The method of claim 5, wherein the ribbon comprises amorphous steel, and wherein the magnetic core is a transformer core.

7. The method of claims 5 or 6, wherein applying the layer of silicon polymer precursor comprises applying a polysilazane and/or organo-polysilazane precursor solution.

8. The method of claims 5 or 6, wherein applying the layer of silicon polymer precursor comprises applying a perhydropolysilazane precursor solution.

9. The method of claims 7 or 8, wherein curing the precursor comprises applying a temperature from 20° to 200° Celsius and/or humidity from 40 % to 100 %.

10. The method of claims 7 to 9, wherein the precursor solution is applied by spraying, or dipping the ribbon into a bath.

11. The method of claims 5 to 10, wherein the cured silicon polymer precursor has a thickness from 5 nm to 5 µm.

12. The method of claims 5 to 11, wherein curing comprises exposing the applied precursor to UV radiation.

13. Use of a silicon polymer precursor in the production process of a magnetic core for an electrical device.

14. The use of claim 13, wherein the magnetic core comprises amorphous steel, and wherein the silicon polymer precursor comprises a polysilazane and/or organopolysilazane.

15. The use of claims 13 or 14, wherein the magnetic core is a transformer core, and wherein the silicon polymer precursor comprises perhydropolysilazane.
